# EUROPEAN PATENT SPECIFICATION

(11) **EP 4 345 957 B1**
(45) Date of publication and mention of the grant of the patent: **17.12.2025**
(21) Application number: 23183645.3
(22) Date of filing: 05.07.2023
(51) Int. Cl.: H01M 8/04089

(54) **FUEL CELL SYSTEM**
BRENNSTOFFZELLENSYSTEM
SYSTÈME DE PILE À COMBUSTIBLE

(30) Priority: 15.09.2022 KR 20220116430; 27.09.2022 KR 20220122859
(43) Date of publication of application: 03.04.2024
(73) Proprietor: Hyundai Motor Company, Seoul 06797 (KR); Kia Corporation, Seocho-gu Seoul 06797 (KR)
(72) Inventor: LIM, Seung Taek, 16891 Yongin-si (KR)
(74) Representative: Viering, Jentschura & Partner mbB Patent- und Rechtsanwälte

(56) References cited:
- WO-A1-2020/090879
- US-A1- 2017 240 291
- US-A1- 2021 188 453

## Description

### CROSS-REFERENCE TO RELATED APPLICATION

This application claims the benefit of Korean Patent Application No. 10-2022-0116430 filed in the Korean Intellectual Property Office on September 15, 2022, and Korean Patent Application No. 10-2022-0122859 filed in the Korean Intellectual Property Office on September 27, 2022.

### TECHNICAL FIELD

The present disclosure relates to a fuel cell system, and more particularly, to a fuel cell system capable of improving energy efficiency while ensuring a smooth supply of air to a fuel cell stack.

### BACKGROUND ART

A fuel cell system refers to a system that continuously produces electrical energy by means of a chemical reaction of continuously supplied fuel. Research and development are consistently performed on the fuel cell system as an alternative capable of solving global environmental issues.

In general, the fuel cell system may include a fuel cell stack configured to generate electricity by means of an oxidation-reduction reaction between hydrogen and oxygen, a fuel supply device configured to supply fuel (hydrogen) to the fuel cell stack, an air supply device configured to supply the fuel cell stack with air (oxygen) which is an oxidant required for an electrochemical reaction, and a thermal management system (TMS) configured to discharge reaction heat, which is generated from the fuel cell stack, to the outside of the system and control temperatures of the fuel cell stack.

The air supply device includes an air compressor configured to supply compressed air to the fuel cell stack. The air compressor may be configured to compress and supply air by using a centrifugal force generated by a rotation of an impeller (rotor).

Recently, various attempts have been made to apply the fuel cell system to aerial mobility vehicles, such as helicopters, as well as automobiles.

Meanwhile, to improve the efficiency of the fuel cell system, it is necessary to minimize electric power consumption of the air supply device (air compressor) that supplies air to the fuel cell stack.

In the related art, because the oxygen concentration decreases as the flight altitude of the aerial mobility vehicle increases, it is inevitable to operate the air compressor with a high output (rotate the impeller of the air compressor at high speed) to supply sufficient air (oxygen) to the fuel cell stack. However, there is a problem in that as the output of the air compressor increases, the electric power consumption of the air compressor increases, which causes a deterioration in energy efficiency and system efficiency. Prior art US2021/188453 A1, WO2020/090879 A1, and US2017/240291 A1 teach rotary propelled aircraft (drones) powered by fuel cells, wherein wake air from the rotor is passed to the fuel cell air inlet.

Therefore, recently, various studies have been conducted to supply sufficient air to the fuel cell stack, reduce the electric power consumption, and improve the energy efficiency, but the study results are still insufficient. Accordingly, there is a need to develop a technology to supply sufficient air to the fuel cell stack, reduce the electric power consumption, and improve the energy efficiency.

### SUMMARY

In a general aspect, here is provided a fuel cell system including an air supply line configured to supply inflow air to a fuel cell stack and a wake air supply line connected with the air supply line and configured to supply wake air generated by a rotation of a rotor associated with the fuel cell system, to the air supply line.

The fuel cell system may include an air compressor provided in the air supply line and configured to compress the air and a cooler provided in the air supply line positioned at a downstream side of the air compressor, the cooler being configured to cool the air.

The wake air supply line may include an inflow line configured to receive the wake air,
a first supply line, a first end thereof is connected with the inflow line, and a second end thereof is connected with the air supply line at an upstream side of the cooler, and a second supply line, a third end thereof is connected with the inflow line, and a fourth end thereof is connected with the air supply line at a downstream side of the cooler.

The fuel cells system may include a humidifier provided in the first supply line at the downstream side of the cooler, the humidifier being configured to humidify the inflow air, the second supply line is disposed between the cooler and the humidifier, and the second supply line is connected with the air supply line.

The fuel cell system may include a switching valve provided in the wake air supply line, the switching valve being configured to selectively switch a flow path of the wake air to one of the first supply line or the second supply line.

The switching valve may be configured to selectively switch the flow path of the wake air to one of the first supply line or the second supply line according to a wake air temperature.

The switching valve may be configured to switch the flow path of the wake air to the first supply line when the wake air temperature is higher than a cooling fluid temperature of a cooling fluid passing through the cooler, and the switching valve may be configured to switch the flow path of the wake air to the second supply line when the wake air temperature is lower than the cooling fluid temperature.

The fuel cell system may include a first flow rate adjustment valve configured to connect the first supply line and the air supply line and further configured to selectively adjust a flow rate of one of the inflow air or wake air to be supplied to the fuel cell stack and a second flow rate adjustment valve configured to connect the second supply line and the air supply line and further configured to selectively adjust a flow rate of the inflow air or wake air to be supplied to the fuel cell stack.

The fuel cell system may include a filter member provided in the wake air supply line and configured to filter the wake air.

The rotor may be provided to generate one or more of a lift force and a propulsive force of an object associated with the rotor.

In a general aspect, here is provided a rotary propelled vehicle including a fuel cell system, the fuel cell system including a wake air supply line configured to receive wake air from a rotor of the rotary propelled vehicle, a switching valve configured to switch an output of the wake air supply line between a first supply line and a second supply line, a cooler configured to cool inflow air using the wake air from the first supply line, and a fuel cell stack configured to receive the inflow air from one of the cooler or the second supply line.

The switching valve may configured to output the wake air to the first supply line when a wake air temperature is higher than a cooling fluid temperature of a cooling fluid of the cooler.

The switching valve may be configured to output the wake air to the second supply line when a wake air temperature is lower than a cooling fluid temperature.

The rotary propelled vehicle of claim 11 may include a first flow rate adjustment valve connecting the first supply line and the air supply line and configured to selectively adjust a first flow rate of one of the inflow air or wake air to be supplied to the fuel cell stack and a second flow rate adjustment valve connecting the second supply line and the air supply line and further configured to selectively adjust a second flow rate of the inflow air or wake air to be supplied to the fuel cell stack.

The cooler may supply the inflow air to the second supply line when receiving the inflow air from the first supply line.

In a general aspect, here is provided a processor implemented method including switching, by the processor, a switching valve between a first supply line and a second supply line, the first supply line supplies wake air received from a rotor to a cooler configured to cool inflow air from the first supply line, and the second supply line supplies the wake air to a fuel cell stack configured to receive the inflow air from one of the cooler or the second supply line.

The method may include adjusting a first flow rate adjustment valve connecting the first supply line and a wake air supply line and configured to selectively adjust a first flow rate of one of the inflow air or wake air to be supplied to the fuel cell stack and a second flow rate adjustment valve connecting the second supply line and the wake air supply line and further configured to selectively adjust a second flow rate of the inflow air or wake air to be supplied to the fuel cell stack.

Other features and aspects will be apparent from the following detailed description, the drawings, and the claims.

### BRIEF DESCRIPTION OF THE DRAWINGS

FIG. 1 is a view for explaining an object to which a fuel cell system according to a first embodiment of the present disclosure is applied.
FIG. 2 is a view for explaining the fuel cell system according to the first embodiment of the present disclosure.
FIGS. 3 to 5 are views for explaining a flow path of wake air in the fuel cell system according to the first embodiment of the present disclosure.
FIG. 6 is a view conceptually illustrating a flight vehicle to which an electric power generation device for a flight vehicle according to a second embodiment of the present disclosure may be applied, and an electric power generation device for a flight vehicle.
FIG. 7 is a perspective view illustrating an example of the electric power generation device for a flight vehicle according to the second embodiment of the present disclosure.

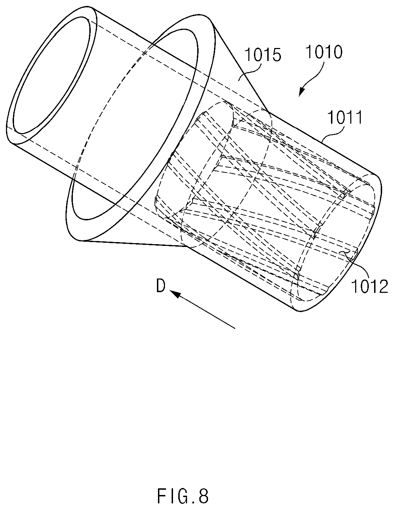

FIG. 8 is a perspective view illustrating an inflow duct according to the second embodiment of the present disclosure.

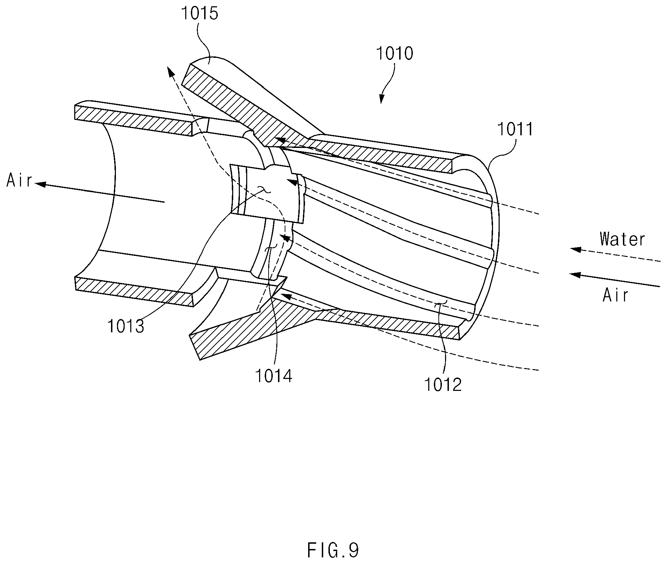

FIG. 9 is a cross-sectional view of FIG. 8.

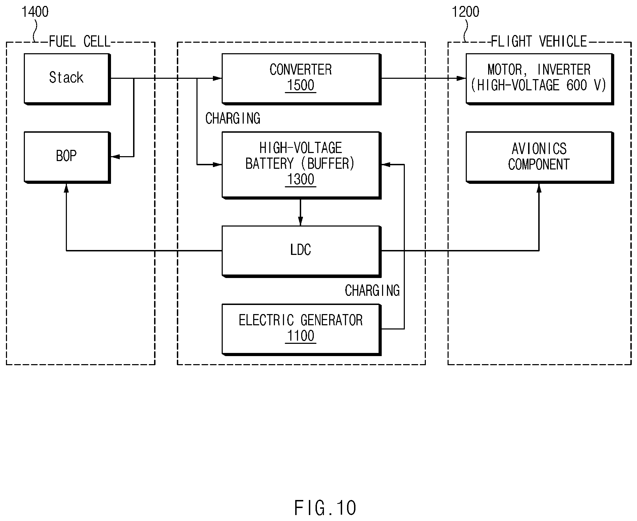

FIG. 10 is a view conceptually illustrating an operation of a flight vehicle power generation system according to the second embodiment of the present disclosure in a high-output mode.

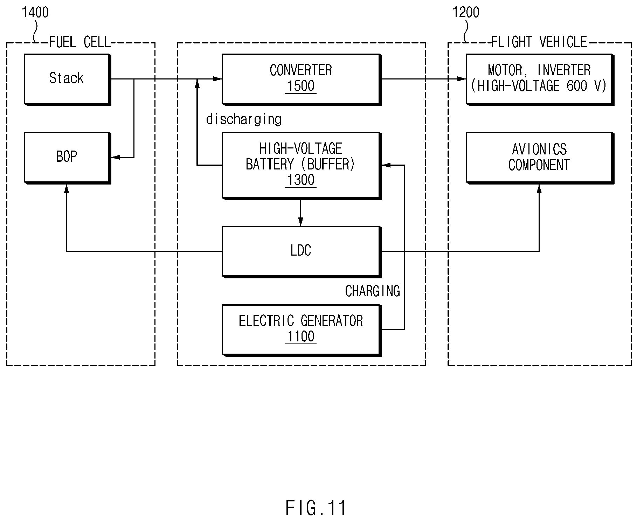

FIG. 11 is a view conceptually illustrating an operation of the flight vehicle power generation system according to the second embodiment of the present disclosure in a low-output mode.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

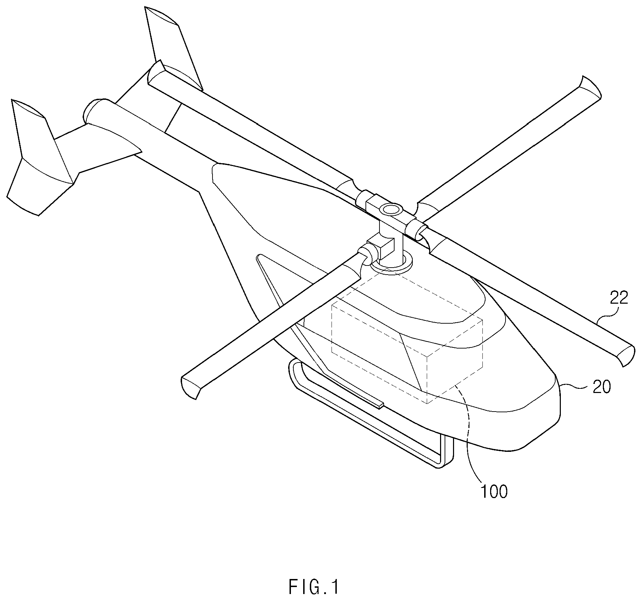

With reference to FIGS. 1 to 5, a fuel cell system 10 according to a first embodiment of the present disclosure includes an air supply line 110 configured to supply air (e.g., fuel air) to a fuel cell stack 100, and a wake air supply line 210 connected to the air supply line 110 and configured to supply wake air, which is generated by a rotation of a rotor 22 provided on an object 20, to the air supply line 110.

For reference, the fuel cell system 10 according to the first embodiment of the present disclosure may be applied to various aerial mobility vehicles (objects) in accordance with required conditions and design specifications. The present disclosure is not restricted or limited by the type and properties of the object 20 to which the fuel cell system 10 is applied.

Hereinafter, an example will be described in which the fuel cell system 10 according to the present disclosure is applied to a helicopter having the rotor 22 provided on an upper portion of a fuselage and configured to generate a lift force or a propulsive force.

For reference, the fuel cell stack 100 refers to a kind of power generation device that generates electrical energy through a chemical reaction of fuel (e.g., hydrogen). The fuel cell stack may be provided in the object 20 (e.g., in the fuselage of the helicopter).

For example, the fuel cell stack 100 may be configured by stacking several tens or hundreds of fuel cells (unit cells) in series.

The fuel cell may have various structures capable of producing electricity by means of an oxidation-reduction reaction between fuel (e.g., hydrogen) and an oxidant (e.g., air).

For example, the fuel cell may include: a membrane electrode assembly (MEA) (not illustrated) having catalyst electrode layers in which electrochemical reactions occur and which are attached to two opposite sides of an electrolyte membrane through which hydrogen ions move; a gas diffusion layer (GDL) (not illustrated) configured to uniformly distribute reactant gases and transfer generated electrical energy; a gasket (not illustrated) and a fastener (not illustrated) configured to maintain leakproof sealability for the reactant gases and a coolant and maintain an appropriate fastening pressure; and a separator (bipolar plate) (not illustrated) configured to move the reactant gases and the coolant.

More specifically, in the fuel cell, hydrogen, which is fuel, and air (oxygen), which is an oxidant, are supplied to an anode and a cathode of the membrane electrode assembly, respectively, through flow paths in the separator, such that the hydrogen is supplied to the anode, and the air is supplied to the cathode.

The hydrogen supplied to the anode is decomposed into hydrogen ions (protons) and electrons by catalysts in the electrode layers provided at two opposite sides of the electrolyte membrane. Only the hydrogen ions are selectively transmitted to the cathode through the electrolyte membrane, which is a cation exchange membrane, and at the same time, the electrons are transmitted to the cathode through the gas diffusion layer and the separator which are conductors.

At the cathode, the hydrogen ions supplied through the electrolyte membrane and the electrons transmitted through the separator meet oxygen in the air supplied to the cathode by an air supply device, thereby creating a reaction of producing water. As a result of the movement of the hydrogen ions, the electrons flow through external conductive wires, and the electric current is generated as a result of the flow of the electrons.

The air supply line 110 is connected to the fuel cell stack 100 to supply air to the fuel cell stack 100.

The air supply line 110 may have various structures capable of supplying the air to the fuel cell stack 100. The present disclosure is not restricted or limited by the structure and shape of the air supply line 110.

According to the first exemplary embodiment of the present disclosure, the fuel cell system 10 may include an air compressor 130 provided in the air supply line 110 and configured to compress air, and a cooler 140 positioned at a downstream side of the air compressor 130, disposed in the air supply line 110, and configured to cool air.

A typical compressor capable of compressing and supplying air to be supplied to the fuel cell stack 100 may be used as the air compressor 130. The present disclosure is not restricted or limited by the type and structure of the air compressor 130.

The air compressor 130 may compress air so that the air has a sufficient pressure that allows the air to pass through an inner flow path of the fuel cell stack 100. The degree to which the air is compressed may be variously changed in accordance with the operating condition of the fuel cell stack 100.

In addition, various types of accessory devices (not illustrated), such as an air filter 120 for filtering out foreign substances such as dust contained in the air to be introduced into the fuel cell stack 100 along the air supply line 110, may be provided in the air supply line 110. The present disclosure is not restricted or limited by the type and structure of the accessory device provided in the air supply line 110. For example, the air filter 120 may be provided in the air supply line 110 and positioned at an upstream side of the air compressor 130.

The cooler 140 is provided in the air supply line 110 and positioned at the downstream side of the air compressor 130. The cooler 140 cools the air having passed through the air compressor 130 (the air to be supplied to the fuel cell stack 100).

That is, the air is supplied to the fuel cell stack 100 in a state of being compressed by the air compressor 130 so that the air may have a sufficient pressure that enables the air to pass through the inner flow path of the fuel cell stack 100. The process of compressing the air generates heat, and the fuel cell stack 100 may be overheated when a temperature of the air to be supplied to the fuel cell stack 100 is raised to a certain level or higher, which may cause a deterioration in performance of the fuel cell stack 100. Therefore, the air compressed by the air compressor 130 may be cooled by the cooler 140 before the air is supplied to the fuel cell stack 100.

A typical air cooler 140 capable of cooling air by using a cooling fluid (e.g., coolant) may be used as the cooler 140. The present disclosure is not restricted or limited by the type and structure of the cooler 140. For example, a typical air-cooled or water-cooled cooler 140 may be used as the cooler 140.

According to the first exemplary embodiment of the present disclosure, the fuel cell system 10 may include a humidifier 150 configured to humidify the air to be supplied to the fuel cell stack 100.

More specifically, the humidifier 150 is provided in the air supply line 110 so as to be positioned at a downstream side of the cooler 140 and humidifies the air having passed through the cooler 140 (or the wake air supplied along the wake air supply line 210).

For example, the humidifier 150 may be configured to humidify air to be supplied to the fuel cell stack 100 by using moist air discharged from the fuel cell stack 100.

In this case, the humidification of air is defined as a process of increasing the humidity of the air.

The humidifier 150 may have various structures capable of humidifying the inflow gas by using the moist air discharged from the fuel cell stack 100. The present disclosure is not restricted or limited by the type and structure of the humidifier 150.

For example, the humidifier 150 may include an inflow gas supply port (not illustrated) through which inflow gas (air) is introduced (supplied), an inflow gas discharge port (not illustrated) through which the (humidified) inflow gas having passed through the interior of the humidifier 150 is discharged, a moist air supply port (not illustrated) through which moist air discharged from the fuel cell stack 100 is supplied, and a moist air discharge port (not illustrated) through which the moist air, which has humidified the inflow gas, is discharged to the outside.

The inflow gas (air) supplied to the inflow gas supply port of the humidifier 150 through the air compressor 130 and the air cooler 140 may be humidified by the moist air while passing through a humidification membrane (e.g., a hollow fiber membrane) (not illustrated) provided in the form of a tube and disposed in the humidifier 150. Then, the humidified inflow gas may be supplied to the fuel cell stack 100 through the air supply line 110 via the inflow gas discharge port.

Further, the moist air (or the produced water) discharged from the fuel cell stack 100 may be supplied to the moist air supply port, humidify the inflow gas in the humidifier 150, and then be discharged to the outside of the humidifier 150 through the moist air discharge port.

In addition, a gas discharge line (not illustrated) may be connected to the humidifier 150, and air (air and condensate water) and hydrogen (hydrogen and condensate water) having passed through the humidifier 150 may be discharged to the outside through the gas discharge line (not illustrated). An air pressure control (APC) (not illustrated) may be provided in the gas discharge line and generate backpressure in the fuel cell stack 100. A silencer (not illustrated) may be provided in the gas discharge line and reduce exhaust noise caused by exhaust gas (air and hydrogen).

The wake air supply line 210 is connected to the air supply line 110 to supply the wake air, which is generated by the rotation of the rotor 22 provided on the object 20, to the air supply line 110.

For reference, in the first embodiment of the present disclosure, the wake air, which is generated by the rotation of the rotor 22, is defined as a flow of air forcibly generated at a rear side (downstream side) of the rotor 22 when the rotor 22 rotates to generate the lift force or propulsive force of the object 20.

The wake air supply line 210 may have various structures capable of supplying the wake air, which is generated by the rotation of the rotor 22, to the air supply line 110. The present disclosure is not restricted or limited by the structure of the wake air supply line 210.

According to the first exemplary embodiment of the present disclosure, the wake air supply line 210 may include an inflow line 212 disposed adjacent to the rotor 22 and configured to introduce the wake air, a first supply line 214 having one end connected to the inflow line 212, and the other end connected to the air supply line 110 at the upstream side of the cooler 140, and a second supply line 216 having one end connected to the inflow line 212, and the other end connected to the air supply line 110 at the downstream side of the cooler 140.

The inflow line 212 may have various structures into which the wake air may be introduced. The present disclosure is not restricted or limited by the structure and position of the inflow line 212.

For example, the inflow line 212 may have a straight shape having one end (inlet end) exposed to the upper portion of the fuselage of the object 20 with which the wake air collides. Alternatively, the inflow line may have a curved shape or other shapes.

The first supply line 214 is provided to supply the wake air, which is introduced into the inflow line 212, to the air supply line 110 at the upstream side of the cooler 140.

The first supply line 214 may have various structures capable of connecting the inflow line 212 and the air supply line 110. The present disclosure is not restricted or limited by the structure of the first supply line 214.

For example, the first supply line 214 may have an approximately "L" shape. One end of the first supply line 214 may be connected to the inflow line 212, and the other end of the first supply line 214 may be disposed between the air compressor 130 and the cooler 140 and connected to the air supply line 110. According to another embodiment of the present disclosure, the first supply line may have a straight shape, a curved shape, or other shapes. Alternatively, the other end of the first supply line may be disposed between the air filter and the air compressor and connected to the air supply line.

The second supply line 216 is provided to supply the wake air, which is introduced into the inflow line 212, to the air supply line 110 at the downstream side of the cooler 140.

The second supply line 216 may have various structures capable of connecting the inflow line 212 and the air supply line 110. The present disclosure is not restricted or limited by the structure of the second supply line 216.

For example, the second supply line 216 may have an approximately "L" shape. One end of the second supply line 216 may be connected to the inflow line 212, and the other end of the second supply line 216 may be disposed between the cooler 140 and the humidifier 150 and connected to the air supply line 110. According to another embodiment of the present disclosure, the second supply line may have a straight shape, a curved shape, or other shapes. Alternatively, the other end of the second supply line may be disposed between the humidifier and the fuel cell stack and connected to the air supply line.

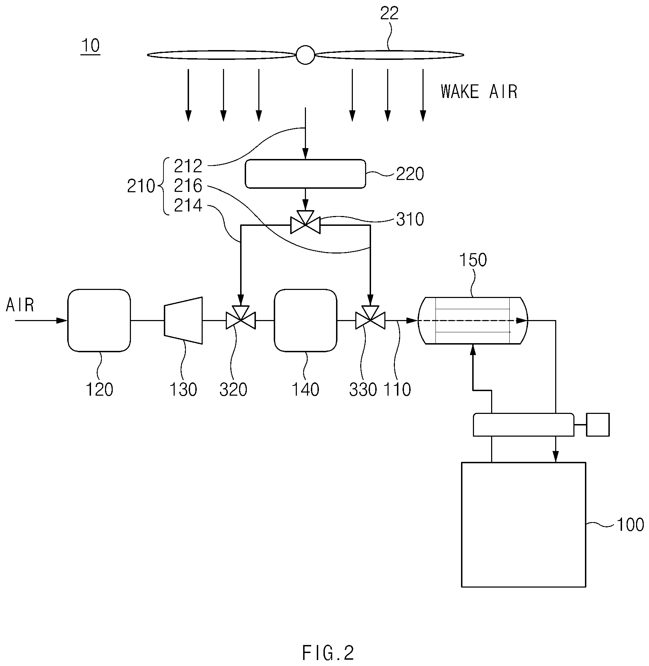

With reference to FIGS. 2 to 4, according to the first exemplary embodiment of the present disclosure, the fuel cell system 10 may include a switching valve 310 provided in the wake air supply line 210 and configured to selectively switch the flow path of the wake air to the first supply line 214 or the second supply line 216.

The switching valve 310 is provided in the wake air supply line 210 to selectively switch the flow path of the wake air to the first supply line 214 or the second supply line 216.

Various valve means capable of selectively switching the flow path of the wake air to the first supply line 214 or the second supply line 216 may be used as the switching valve 310. The present disclosure is not restricted or limited by the type and structure of the switching valve 310.

For example, a typical three-way valve may be used as the switching valve 310. More specifically, the switching valve 310 may include a first port (not illustrated) connected to the inflow line 212, a second port (not illustrated) connected to the first supply line 214, and a third port (not illustrated) connected to the second supply line 216.

The flow path of the wake air may be selectively switched to the first supply line 214 or the second supply line 216 by opening or closing the second and third ports of the switching valve 310. That is, when the second port is opened and the third port is closed, the wake air passing through the switching valve 310 may be supplied to the air supply line 110 via the first supply line 214. On the contrary, when the third port is opened and the second port is closed, the wake air passing through the switching valve 310 may be supplied to the air supply line 110 via the second supply line 216.

A switching time point of wake air made by the switching valve 310 (a time point at which the flow path of the wake air is switched to the first supply line 214 or the second supply line 216) may be variously changed in accordance with required conditions and design specifications. The present disclosure is not restricted or limited by the switching time point of the wake air made by the switching valve 310.

According to the first exemplary embodiment of the present disclosure, the switching valve 310 may selectively switch the flow path of the wake air to the first supply line 214 or the second supply line 216 on the basis of a temperature of the wake air.

For example, the switching valve 310 may selectively switch the flow path of the wake air to the first supply line 214 or the second supply line 216 on the basis of a temperature of the wake air with respect to a temperature of a cooling fluid passing through the cooler 140.

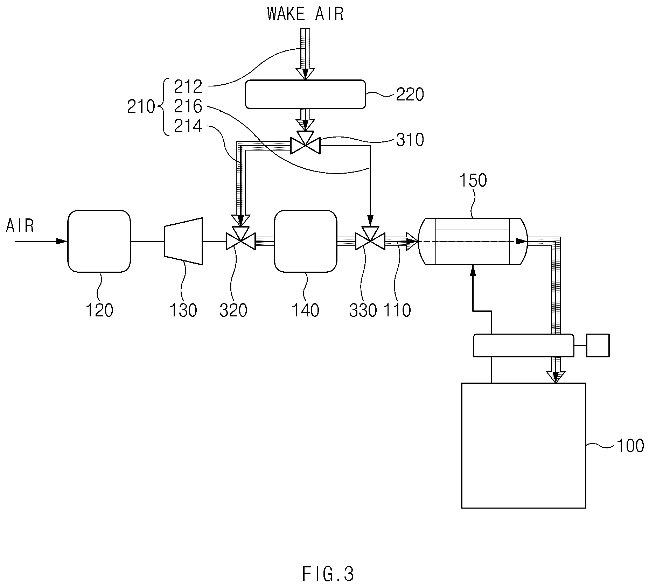

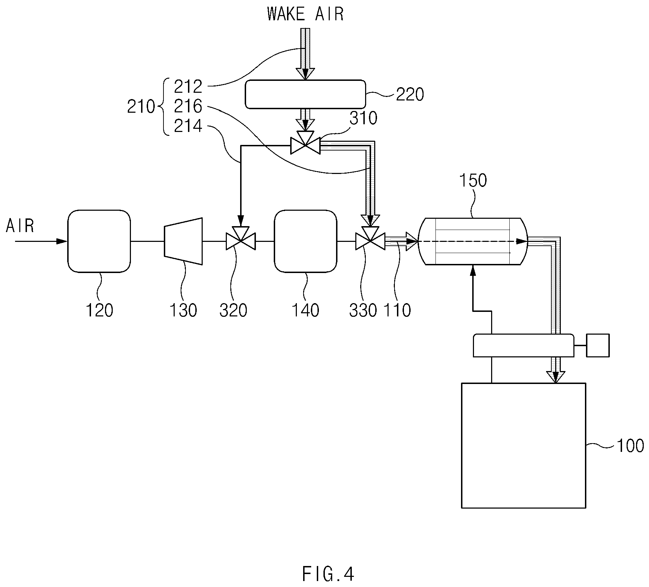

According to the first exemplary embodiment of the present disclosure, as illustrated in FIG. 3, when the temperature of the wake air is higher than the temperature of the cooling fluid passing through the cooler 140, the switching valve 310 may switch the flow path of the wake air to the first supply line 214. As illustrated in FIG. 4, when the temperature of the wake air is lower than the temperature of the cooling fluid, the switching valve 310 may switch the flow path of the wake air to the second supply line 216.

As described above, in the first embodiment of the present disclosure, the flow path of the wake air is selectively switched to the first supply line 214 or the second supply line 216 on the basis of the temperature of the wake air. When it is not necessary to cool the wake air by means of the cooler 140, the wake air is introduced into the air supply line 110 at the downstream side of the cooler 140 through the second supply line 216. Therefore, it is possible to obtain an advantageous effect of preventing a decrease in pressure of the wake air caused by a differential pressure of the cooler 140.

Meanwhile, in the first embodiment of the present disclosure illustrated and described above, the example has been described in which the flow path of the wake air is switched on the basis of the temperature of the cooling fluid passing through the cooler 140. However, according to another embodiment of the present disclosure, the flow path of the wake air may be switched on the basis of the temperature of the air having passed through the cooler.

According to the first exemplary embodiment of the present disclosure, the fuel cell system 10 may include a first flow rate adjustment valve 320 configured to connect the first supply line 214 and the air supply line 110 and selectively adjust a flow rate of the air or wake air to be supplied to the fuel cell stack 100, and a second flow rate adjustment valve 330 configured to connect the second supply line 216 and the air supply line 110 and selectively adjust a flow rate of the air or wake air to be supplied to the fuel cell stack 100.

The first flow rate adjustment valve 320 and the second flow rate adjustment valve 330 are provided to adjust the flow rate of the air or wake air to be supplied to the fuel cell stack 100 on the basis of an operating condition (e.g., a low-output operation or a high-output operation) of the fuel cell stack 100.

Various valve means capable of adjusting the flow rate of the air or wake air moving along the first supply line 214 and the air supply line 110 may be used as the first flow rate adjustment valve 320. The present disclosure is not restricted or limited by the type and structure of the first flow rate adjustment valve 320.

For example, a typical three-way valve may be used as the first flow rate adjustment valve 320. More specifically, the first flow rate adjustment valve 320 may include a first-first port (not illustrated) connected to the first supply line 214 and configured to introduce the wake air, a first-second port (not illustrated) connected to the air supply line 110 so that the air having passed through the air compressor 130 is introduced, and a first-third port connected to the air supply line 110 so that the air or wake air passing through the first flow rate adjustment valve 320 is supplied to the fuel cell stack 100.

The flow rate of the air or wake air introduced into the fuel cell stack 100 may be controlled by adjusting opening degrees (valve opening angles) of the respective ports (the first-first port, the first-second port, and the first-third port) of the first flow rate adjustment valve 320.

For example, as illustrated in FIG. 3, during a low-output operation of the fuel cell stack 100, the first-second port of the first flow rate adjustment valve 320 may be closed, and the first-first port and the first-third port may be opened, such that only the wake air may be supplied in a state in which the supply of air to the fuel cell stack 100 is cut off (the operation of the air compressor 130 is stopped). In contrast, during a high-output operation of the fuel cell stack 100, all the ports (the first-first port, the first-second port, and the first-third port) of the first flow rate adjustment valve 320 may be maximally opened, such that both the air introduced into the air supply line 110 and the wake air introduced into the wake air supply line 210 may be supplied to the fuel cell stack 100.

For example, in case that a wake (10 to 15 m/s) of a helicopter is used and a diameter of the wake air supply line 210 50 mm, the pressure supplement of 86 to 130 kg/h and 12 to 28 kPa may be made by the wake air supply line 210.

For reference, the air compressor 130 only needs to operate to satisfy a target air flow rate (an air flow rate + a wake air flow rate) of the fuel cell stack 100, i.e., the air compressor 130 only needs to supply air by the amount corresponding a value made by subtracting the wake air flow rate from the target air flow rate, which may minimize a supercharging operation (high-output operation) of the air compressor 130. Therefore, it is possible to obtain an advantageous effect of minimizing the electric power consumption of the air compressor 130 and improving the energy efficiency and system efficiency of the fuel cell system 10.

Various valve means capable of adjusting the flow rate of the air or wake air moving along the second supply line 216 and the air supply line 110 may be used as the second flow rate adjustment valve 330. The present disclosure is not restricted or limited by the type and structure of the second flow rate adjustment valve 330.

For example, a typical three-way valve may be used as the second flow rate adjustment valve 330. More specifically, the second flow rate adjustment valve 330 may include a second-first port (not illustrated) connected to the second supply line 216 and configured to introduce the wake air, a second-second port (not illustrated) connected to the air supply line 110 so that the air having passed through the air compressor 130 is introduced, a second-third port connected to the air supply line 110 so that the air or wake air passing through the first flow rate adjustment valve 320 is supplied to the fuel cell stack 100.

The flow rate of the air or wake air introduced into the fuel cell stack 100 may be controlled by adjusting opening degrees (valve opening angles) of the respective ports (the second-first port, the second-second port, and the second-third port) of the second flow rate adjustment valve 330.

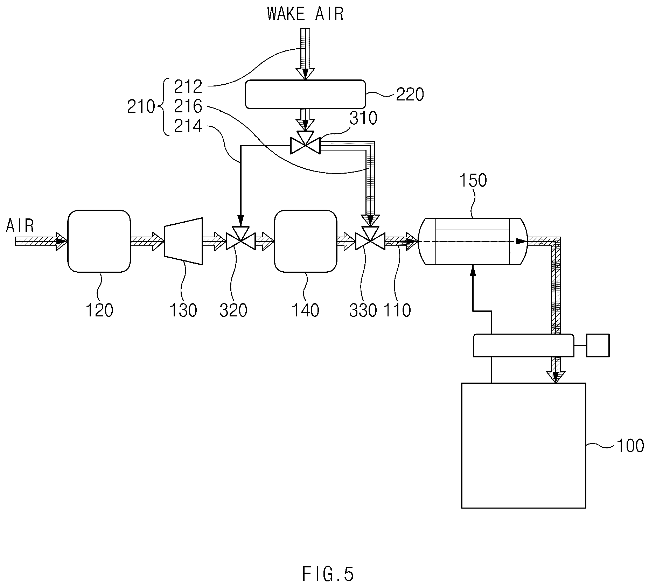

For example, during the low-output operation of the fuel cell stack 100, the second-second port of the second flow rate adjustment valve 330 may be closed, and the second-first port and the second-third port may be opened, such that only the wake air may be supplied in a state in which the supply of air to the fuel cell stack 100 is cut off (the operation of the air compressor 130 is stopped). In contrast, as illustrated in FIG. 5, during the high-output operation of the fuel cell stack 100, all the ports (the second-first port, the second-second port, and the second-third port) of the second flow rate adjustment valve 330 may be maximally opened, such that both the air introduced into the air supply line 110 and the wake air introduced into the wake air supply line 210 may be supplied to the fuel cell stack 100.

In this case, the air compressor 130 only needs to operate to satisfy a target air flow rate (an air flow rate + a wake air flow rate) of the fuel cell stack 100, i.e., the air compressor 130 only needs to supply air by the amount corresponding a value made by subtracting the wake air flow rate from the target air flow rate, which may minimize a supercharging operation (high-output operation) of the air compressor 130. Therefore, it is possible to obtain an advantageous effect of minimizing the electric power consumption of the air compressor 130 and improving the energy efficiency and system efficiency of the fuel cell system 10.

According to the first exemplary embodiment of the present disclosure, the fuel cell system may include a filter member 220 provided in the wake air supply line 210 and configured to filter the wake air.

In this case, the configuration in which the air is filtered means a configuration in which the filter member 220 filters out foreign substances such as dust contained in the wake air.

Various filters capable of filtering the wake air passing through the wake air supply line 210 may be used as the filter member 220. The present disclosure is not restricted or limited by the type and structure of the filter member 220.

For example, the filter member 220 may be disposed in the inflow line 212 of the wake air supply line 210. A typical dry filter or a paper filter (e.g., an air filter) may be used as the filter member 220.

As described above, according to the first embodiment of the present disclosure, the filter member 220 may be provided in the wake air supply line 210, such that the wake air supplied to the fuel cell stack 100 along the wake air supply line 210 may be filtered by the filter member 220. Therefore, it is possible to obtain an advantageous effect of minimizing the number of foreign substances such as dust to be introduced into the fuel cell stack 100 and further improving the safety and reliability.

According to the first embodiment of the present disclosure described above, it is possible to obtain an advantageous effect of improving the energy efficiency while ensuring the smooth supply of air to the fuel cell stack.

In particular, according to the first embodiment of the present disclosure, it is possible to obtain an advantageous effect of minimizing the electric power consumption of the air compressor and improving the energy efficiency and system efficiency.

Among other things, according to the first embodiment of the present disclosure, it is possible to supply air (oxygen) to the fuel cell stack by using the wake generated by the rotation of the rotor applied to the aerial mobility vehicle.

In addition, according to the first embodiment of the present disclosure, it is possible to obtain an advantageous effect of simplifying the structure and improving the degree of design freedom and spatial utilization.

Hereinafter, some second embodiments of the present disclosure will be described in detail with reference to the illustrative drawings. In giving reference numerals to constituent elements of the respective drawings, the same constituent elements will be designated by the same reference numerals, if possible, even though the constituent elements are illustrated in different drawings. Further, in the following description of the second exemplary embodiments of the present disclosure, a detailed description of publicly known configurations or functions incorporated herein will be omitted when it is determined that the detailed description obscures the subject matters of the second exemplary embodiments of the present disclosure.

An electric power generation device 1100 according to a second embodiment of the present disclosure refers to an electric power generation device 1100 for a flight vehicle that is capable of being mounted on a flight vehicle 1200. However, the present disclosure is not limited thereto. The present disclosure may be applied to power generation systems in various fields.

In the present specification, a forward/rearward direction, a leftward/rightward direction, and an upward/downward direction are defined for convenience of description and may be orthogonal to one another. However, these directions are defined relative to the direction in which the electric power generation device 1100 for a flight vehicle is arranged. The upward/downward direction may not necessarily mean a vertical direction.

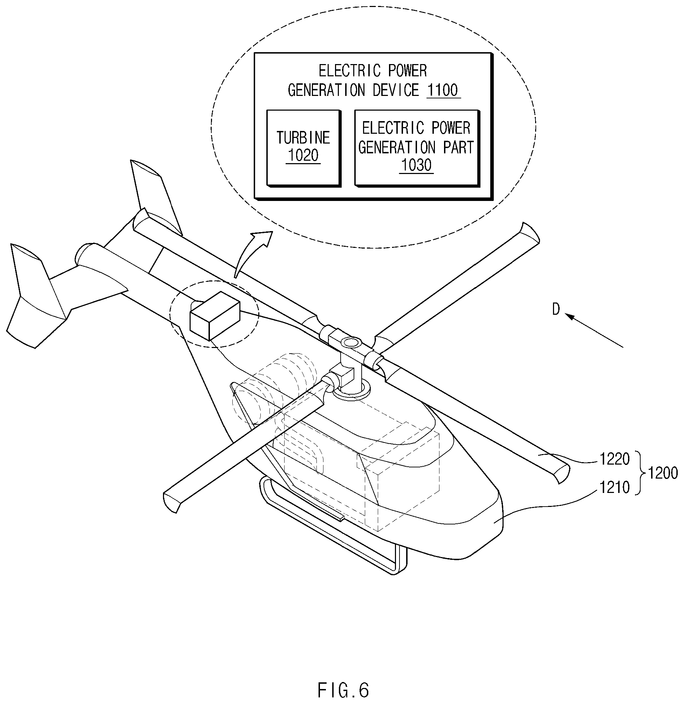

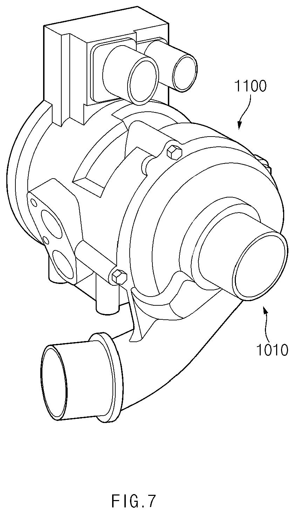

FIG. 6 is a view conceptually illustrating a flight vehicle to which the electric power generation device for a flight vehicle according to the second embodiment of the present disclosure may be applied, and the electric power generation device for a flight vehicle. FIG. 7 is a perspective view illustrating an example of the electric power generation device for a flight vehicle according to the second embodiment of the present disclosure.

As illustrated in FIG. 6, the electric power generation device 1100 for a flight vehicle may be coupled to the flight vehicle 1200. The electric power generation device 1100 for a flight vehicle according to the second embodiment of the present disclosure may include an inflow duct 1010, a turbine 1020, and an electric power generation part 1030. A fluid may be introduced into the inflow duct 1010 in a reference direction D. The reference direction D may be a direction opposite to the direction in which the flight vehicle 1200 travels. When the flight vehicle 1200 travels forward, the reference direction D may be a rearward direction. A wake may be generated when the flight vehicle 1200 travels forward. The wake, which is generated when the flight vehicle 1200 travels, may be introduced through the inflow duct 1010.

The turbine 1020 may be rotated by the fluid introduced from the inflow duct 1010. The electric power generation part 1030 may generate electric power as the turbine 1020 rotates. For example, the turbine 1020 may include a rotor, and the electric power generation part 1030 may include a stator.

Meanwhile, the inflow duct 1010 may include a duct body 1011 and a slot region 1012. The duct body 1011 may have a tubular shape extending in the reference direction D. The slot region 1012 may be recessed in an inner peripheral surface of the duct body 1011. The slot region 1012 may be formed to be inclined in a circumferential direction of the duct body 1011 in the reference direction D. Hereinafter, the circumferential direction may mean a circumferential direction of the duct body 1011. For example, the slot region 1012 may have a spiral extending in the reference direction D.

For example, the wake introduced in the reference direction D may include air and water. According to the electric power generation device 1100 for a flight vehicle according to the second embodiment of the present disclosure, the water may flow along the slot region 1012 by a centrifugal force, and characteristics of a turbulent flow of air may be reduced during a process in which the wake is introduced along the slot region 1012 having a spiral shape.

Hereinafter, a specific shape of the inflow duct 1010 will be further described.

The slot region 1012 may be provided as a plurality of slot regions 1012. In this case, the plurality of slot regions 1012 may be arranged to be spaced apart from one another in the circumferential direction.

The inflow duct 1010 may include an opening region 1013. The opening region 1013 may be connected to an end of the slot region 1012 based on the reference direction D and opened radially outward from the duct body 1011. The water introduced into the slot region 1012 may move in the reference direction D from the slot region 1012 and then be discharged through the opening region 1013.

For example, the opening region 1013 may communicate with any one of the plurality of slot regions 1012. Meanwhile, the inflow duct 1010 may further include a recessed region 1014. The recessed region 1014 may be recessed in the circumferential direction in an inner peripheral surface of the duct body 1011. The recessed region 1014 may communicate with an end of another of the plurality of slot regions 1012 based on the reference direction D. Some water may flow in the circumferential direction in the recessed region 1014 and then be discharged through the opening region 1013.

The opening region 1013 may be provided as a plurality of opening regions 1013, and the recessed region 1014 may be provided as a plurality of recessed regions 1014. In this case, the opening regions 1013 and the recessed regions 1014 may be alternately arranged in the circumferential direction.

In addition, the inflow duct 1010 may further include a protruding portion 1015. The protruding portion 1015 may extend while being inclined radially outward from an outer peripheral surface of the duct body 1011 in the reference direction D. The protruding portion 1015 may extend from an end of the duct body 1011 based on a direction opposite to the reference direction D of the opening region 1013. The protruding portion 1015 may guide the water, which is discharged from the opening region 1013, in the reference direction D and in a direction inclined radially outward.

### <Flight Vehicle Power Generation System>

Hereinafter, a flight vehicle power generation system including the electric power generation device 1100 will be described in detail. The flight vehicle power generation system may include the flight vehicle 1200 and the electric power generation device 1100. In this case, the flight vehicle 1200 is not particularly limited as long as the flight vehicle 1200 is a movement means capable of flying. The electric power generation device 1100 may generate electric power by using the wake generated when the flight vehicle 1200 travels as described above.

For example, the flight vehicle 1200 may include a flight vehicle body 1210 and a propeller 1220. The propeller may be rotatably connected to the flight vehicle 1200. Meanwhile, the electric power generation device 1100 may be advantageously positioned at a position at which the intensity of the wake is high. For example, the electric power generation device 1100 may be disposed at a side of the propeller 1220 of the flight vehicle body 1210 based on the reference direction D.

The flight vehicle power generation system according to the second embodiment of the present disclosure may further include a battery 1300, a fuel cell 1400, and a converter 1500. The battery 1300 may be connected to the electric power generation device 1100 and store electric power supplied from the electric power generation device 1100. In addition, the battery 1300 may supply electric power to a low DC/DC converter (LDC). The LDC may transmit an electrical signal for operating the BOP of the fuel cell 1400 or the avionics components of the flight vehicle 1200.

The fuel cell 1400 may be provided to produce electric power and electrically connected to the battery 1300. The fuel cell 1400 may charge the battery 1300.

The converter 1500 may be electrically connected to the fuel cell 1400 and the battery 1300. The converter 1500 may convert the electric power, which is supplied from the fuel cell 1400 and the battery 1300, and supply the electric power to the flight vehicle 1200. The converted electric power supplied to the flight vehicle may be supplied to the motor and the inverter.

In a high-output mode in which high electric power is required for the flight vehicle 1200, the battery 1300 may supply electric power to the converter 1500. In this case, the entire output of the fuel cell 1400 may be transmitted to the converter 1500, and electric power stored in the battery 1300 may be supplied to the converter 1500, such that the high output may be maintained.

In addition, in a low-output mode in which low electric power is required for the flight vehicle 1200, the fuel cell 1400 may supply a part of the electric power to the converter 1500, and supply the remaining electric power to the battery 1300. In this case, only a part of the electric power produced by the fuel cell 1400 may be sufficiently supplied to the converter 1500, and the remaining electric power produced by the fuel cell 1400 may be used to charge the battery 1300. That is, the electric power, which is supplied from the electric power generation device 1100, and the electric power, which is supplied from the fuel cell 1400, may be stored in the battery 1300.

According to the flight vehicle power generation system according to the second embodiment of the present disclosure, the electric power generation device 1100, which generates electric power by using the wake, may accessorily charge the battery in addition to the electric power supplied from the fuel cell 1400. Therefore, it is possible to relatively reduce the number of hydrogen tanks, which store hydrogen, and thus to reduce the weight of the flight vehicle.

According to the second embodiment of the present disclosure, the output may be supplemented by the electric power generation device mounted in the flight vehicle, which makes it possible to reduce the number of hydrogen tanks, decrease the weight, and increase the flight time.

While the embodiments have been described above, the embodiments are just illustrative and not intended to limit the present disclosure. It can be appreciated by those skilled in the art that various modifications and applications, which are not described above, may be made to the present embodiment without departing from the intrinsic features of the present embodiment. For example, the respective constituent elements specifically described in the embodiments may be modified and then carried out. Further, it should be interpreted that the differences related to the modifications and applications are included in the scope of the present disclosure defined by the appended claims.

## Claims

1. A fuel cell system (10), comprising:
an air supply line (110) configured to supply inflow air to a fuel cell stack (100); and
a wake air supply line (210) connected with the air supply line and configured to supply wake air generated by a rotation of a rotor (22) associated with the fuel cell system, to the air supply line.

2. The fuel cell system of claim 1, further comprising:
an air compressor provided in the air supply line and configured to compress the air; and
a cooler provided in the air supply line positioned at a downstream side of the air compressor, the cooler being configured to cool the air.

3. The fuel cell system of claim 2, wherein the wake air supply line comprises:
an inflow line configured to receive the wake air;
a first supply line, wherein a first end thereof is connected with the inflow line, and wherein a second end thereof is connected with the air supply line at an upstream side of the cooler; and
a second supply line, wherein a third end thereof is connected with the inflow line, and wherein a fourth end thereof is connected with the air supply line at a downstream side of the cooler.

4. The fuel cell system of claim 3, comprising:
a humidifier provided in the first supply line at the downstream side of the cooler, the humidifier being configured to humidify the inflow air,
wherein the second supply line is disposed between the cooler and the humidifier, and wherein the second supply line is connected with the air supply line.

5. The fuel cell system of claim 3 or 4, comprising:
a switching valve provided in the wake air supply line, the switching valve being configured to selectively switch a flow path of the wake air to one of the first supply line or the second supply line.

6. The fuel cell system of claim 5, wherein the switching valve is configured to selectively switch the flow path of the wake air to one of the first supply line or the second supply line according to a wake air temperature.

7. The fuel cell system of claim 6, wherein the switching valve is configured to switch the flow path of the wake air to the first supply line when the wake air temperature is higher than a cooling fluid temperature of a cooling fluid passing through the cooler, and
wherein the switching valve is configured to switch the flow path of the wake air to the second supply line when the wake air temperature is lower than the cooling fluid temperature.

8. The fuel cell system of any one of claims 3 to 7, further comprising:
a first flow rate adjustment valve configured to connect the first supply line and the air supply line and further configured to selectively adjust a flow rate of one of the inflow air or wake air to be supplied to the fuel cell stack; and
a second flow rate adjustment valve configured to connect the second supply line and the air supply line and further configured to selectively adjust a flow rate of the inflow air or wake air to be supplied to the fuel cell stack.

9. The fuel cell system of any one of claims 1 to 8, comprising:
a filter member provided in the wake air supply line and configured to filter the wake air.

10. The fuel cell system of any one of claims 1 to 9, wherein the rotor is provided to generate one or more of a lift force and a propulsive force of an object associated with the rotor.

11. A rotary propelled vehicle, comprising:
a fuel cell system (10), the fuel cell system comprising:
a wake air supply line (210) configured to receive wake air from a rotor (22) of the rotary propelled vehicle;
a switching valve (310) configured to switch an output of the wake air supply line between a first supply line (214) and a second supply line (216);
a cooler (140) configured to cool inflow air using the wake air from the first supply line; and
a fuel cell stack (100) configured to receive the inflow air from one of the cooler or the second supply line.

12. The rotary propelled vehicle of claim 11, wherein the switching valve is configured to output the wake air to the first supply line when a wake air temperature is higher than a cooling fluid temperature of a cooling fluid of the cooler.

13. The rotary propelled vehicle of claim 11 or 12, wherein the switching valve is configured to output the wake air to the second supply line when a wake air temperature is lower than a cooling fluid temperature.

14. The rotary propelled vehicle of any one of claims 11 to 13, further comprising:
a first flow rate adjustment valve connecting the first supply line and the air supply line and configured to selectively adjust a first flow rate of one of the inflow air or wake air to be supplied to the fuel cell stack; and
a second flow rate adjustment valve connecting the second supply line and the air supply line and further configured to selectively adjust a second flow rate of the inflow air or wake air to be supplied to the fuel cell stack.

15. The rotary propelled vehicle of any one of claims 11 to 14, wherein, the cooler supplies the inflow air to the second supply line when receiving the inflow air from the first supply line.

## Patentansprüche

1. Ein Brennstoffzellensystem (10), aufweisend:
eine Luftzufuhrleitung (110), welche dazu eingerichtet ist, einem Brennstoffzellenstapel (100) Einströmluft zuzuführen, und
eine Nachlaufluft-Zufuhrleitung (210), welche mit der Luftzufuhrleitung verbunden ist und dazu eingerichtet ist, Nachlaufluft, welche durch die Drehung eines mit dem Brennstoffzellensystem im Zusammenhang stehenden Rotors erzeugt wird, der Luftzufuhrleitung zuzuführen.

2. Das Brennstoffzellensystem nach Anspruch 1, ferner aufweisend
einen Luftverdichter, welcher in der Luftzufuhrleitung vorgesehen ist und dazu eingerichtet ist, die Luft zu verdichten, und
einen Kühler, welcher in der Luftzufuhrleitung auf einer Stromabwärtsseite des Luftverdichters angeordnet vorgesehen ist, wobei der Kühler zum Kühlen der Luft eingerichtet ist.

3. Das Brennstoffzellensystem nach Anspruch 2, wobei die Nachlaufluft-Zufuhrleitung aufweist
eine Einströmleitung, welche dazu eingerichtet ist, die Nachlaufluft zu aufzunehmen,
eine erste Zufuhrleitung, wobei ein erstes Ende davon mit der Einströmleitung verbunden ist und ein zweites Ende davon mit der Luftzufuhrleitung an einer Stromaufwärtsseite des Kühlers verbunden ist, und
eine zweite Zufuhrleitung, wobei ein drittes Ende davon mit der Einströmleitung verbunden ist und ein viertes Ende davon mit der Luftzufuhrleitung an einer Stromabwärtsseite des Kühlers verbunden ist.

4. Das Brennstoffzellensystem nach Anspruch 3, aufweisend:
einen Befeuchter, welcher in der ersten Zufuhrleitung an der Stromabwärtsseite des Kühlers vorgesehen ist, wobei der Befeuchter dazu eingerichtet ist, die einströmende Luft zu befeuchten,
wobei die zweite Zufuhrleitung zwischen dem Kühler und dem Befeuchter angeordnet ist, und wobei die zweite Zufuhrleitung mit der Luftzufuhrleitung verbunden ist.

5. Das Brennstoffzellensystem nach Anspruch 3 oder 4, aufweisend:
ein Umschaltventil, welches in der Nachlaufluft-Zufuhrleitung vorgesehen ist, wobei das Umschaltventil dazu eingerichtet ist, einen Strömungsweg der Nachlaufluft selektiv auf eine von der ersten Zufuhrleitung oder der zweiten Zufuhrleitung umzuschalten.

6. Das Brennstoffzellensystem nach Anspruch 5, wobei das Umschaltventil dazu eingerichtet ist, den Strömungsweg der Nachlaufluft gemäß einer Nachlauflufttemperatur selektiv auf eine von der ersten Zufuhrleitung oder der zweiten Zufuhrleitung umzuschalten.

7. Das Brennstoffzellensystem nach Anspruch 6, wobei das Umschaltventil dazu eingerichtet ist, den Strömungsweg der Nachlaufluft auf die erste Zufuhrleitung zu schalten, wenn die Nachlauflufttemperatur höher ist als eine Kühlfluidtemperatur eines Kühlfluids, welches durch den Kühler strömt, und
wobei das Umschaltventil dazu eingerichtet ist, den Strömungsweg der Nachlaufluft auf die zweite Zufuhrleitung zu schalten, wenn die Nachlauflufttemperatur niedriger ist als die Kühlfluidtemperatur.

8. Das Brennstoffzellensystem nach einem der Ansprüche 3 bis 7, ferner aufweisend:
ein erstes Durchflussratenanpassungsventil, welches dazu eingerichtet ist, die erste Zufuhrleitung und die Luftzufuhrleitung zu verbinden, und welches ferner dazu eingerichtet ist, wahlweise eine Durchflussrate von einer von der Einströmluft oder der Nachlaufluft, welche dem Brennstoffzellenstapel zugeführt werden soll, einzustellen, und
ein zweites Durchflussratenanpassungsventil, welches dazu eingerichtet ist, die zweite Zufuhrleitung und die Luftzufuhrleitung zu verbinden, und welches ferner dazu eingerichtet ist, wahlweise eine Durchflussrate der Einströmluft oder der Nachlaufluft, welche dem Brennstoffzellenstapel zugeführt werden soll, einzustellen.

9. Das Brennstoffzellensystem nach einem der Ansprüche 1 bis 8, aufweisend:
ein Filterelement, welches in der Nachlaufluft-Zufuhrleitung vorgesehen ist und dazu eingerichtet ist, die Nachlaufluft zu filtern.

10. Das Brennstoffzellensystem nach einem der Ansprüche 1 bis 9, wobei der Rotor dazu vorgesehen ist, um eine oder mehrere von einer Auftriebskraft und einer Antriebskraft eines mit dem Rotor verbundenen Objekts zu erzeugen.

11. Ein rotorgetriebenes Fahrzeug, aufweisend:
ein Brennstoffzellensystem (10), wobei das Brennstoffzellensystem aufweist:
eine Nachlaufluft-Zufuhrleitung (210), welche dazu eingerichtet ist, Nachlaufluft von einem Rotor (22) des rotorgetriebenen Fahrzeugs zu empfangen,
ein Umschaltventil (310), welches dazu eingerichtet ist, eine Ausgabe der Nachstromluft-Zufuhrleitung zwischen einer ersten Zufuhrleitung (214) und einer zweiten Zufuhrleitung (216) umzuschalten,
einen Kühler (140), welcher dazu eingerichtet ist, Einströmluft unter Verwendung der Nachlaufluft aus der ersten Zufuhrleitung zu kühlen, und
einen Brennstoffzellenstapel (100), welcher dazu eingerichtet ist, die Einströmluft von einem von dem Kühler oder der zweiten Zufuhrleitung zu empfangen.

12. Das rotorgetriebene Fahrzeug nach Anspruch 11, wobei das Umschaltventil dazu eingerichtet ist, die Nachlaufluft an die erste Zufuhrleitung auszugeben, wenn die Nachlauflufttemperatur höher ist als eine Kühlfluidtemperatur eines Kühlfluids des Kühlers.

13. Das rotorgetriebene Fahrzeug nach Anspruch 11 oder 12, wobei das Umschaltventil dazu eingerichtet ist, die Nachlaufluft an die zweite Zufuhrleitung auszugeben, wenn die Nachlauflufttemperatur niedriger ist als die Kühlfluidtemperatur.

14. Das rotorgetriebene Fahrzeug nach einem der Ansprüche 11 bis 13, ferner aufweisend
ein erstes Durchflussratenanpassungsventil, welches die erste Zufuhrleitung und die Luftzufuhrleitung verbindet und welches dazu eingerichtet ist, wahlweise eine erste Durchflussrate von einer von der Einströmluft oder der Nachlaufluft, welche dem Brennstoffzellenstapel zugeführt werden soll, einzustellen, und
ein zweites Durchflussratenanpassungsventil, welches die zweite Zufuhrleitung und die Luftzufuhrleitung verbindet und welches ferner dazu eingerichtet ist, wahlweise eine zweite Durchflussrate der Einströmluft oder der Nachlaufluft, welche dem Brennstoffzellenstapel zugeführt werden soll, einzustellen.

15. Das rotorgetriebene Fahrzeug nach einem der Ansprüche 11 bis 14, wobei der Kühler die Einströmluft an die zweite Zufuhrleitung zuführt, wenn er die Einströmluft von der ersten Zufuhrleitung empfängt.

## Revendications

1. Système de pile à combustible (10) comprenant :
une conduite d'alimentation en air (110) conçue pour fournir de l'air entrant à un empilement de piles à combustible (100) ; et
une conduite d'alimentation en air de sillage (210) reliée à la conduite d'alimentation en air et conçue pour fournir l'air de sillage généré par une rotation d'un rotor (22) associé au système de pile à combustible à la conduite d'alimentation.

2. Système de pile à combustible selon la revendication 1, comprenant en outre :
un compresseur d'air situé dans la conduite d'alimentation en air et conçu pour comprimer l'air ; et
un refroidisseur situé dans la conduite d'alimentation en air positionné au niveau d'un côté aval du compresseur d'air, le refroidisseur étant conçu pour refroidir l'air.

3. Système de pile à combustible selon la revendication 2, la conduite d'alimentation en air de sillage comprenant :
une conduite d'entrée conçue pour recevoir l'air de sillage ;
une première conduite d'alimentation, dont une première extrémité est reliée à la conduite d'entrée, et dont une deuxième extrémité est reliée à la conduite d'alimentation en air au niveau d'un côté amont du refroidisseur ; et
une seconde conduite d'alimentation, dont une troisième extrémité est reliée à la conduite d'entrée, et dont une quatrième extrémité est reliée à la conduite d'alimentation en air au niveau d'un côté aval du refroidisseur.

4. Système de pile à combustible selon la revendication 3, comprenant :
un humidificateur situé dans la première conduite d'alimentation au niveau du côté aval du refroidisseur, l'humidificateur étant conçu pour humidifier l'air entrant,
la seconde conduite d'alimentation étant disposée entre le refroidisseur et l'humidificateur, et la seconde conduite d'alimentation étant reliée à la conduite d'alimentation en air.

5. Système de pile à combustible selon la revendication 3 ou 4, comprenant :
une soupape de commutation située dans la conduite d'alimentation en air de sillage, la soupape de commutation étant conçue pour commuter sélectivement un chemin d'écoulement de l'air de sillage vers l'une parmi la première conduite d'alimentation ou la seconde conduite d'alimentation.

6. Système de pile à combustible selon la revendication 5, la soupape de commutation étant conçue pour commuter sélectivement le chemin d'écoulement de l'air de sillage vers l'une parmi la première conduite d'alimentation ou la seconde conduite d'alimentation en fonction d'une température d'air de sillage.

7. Système de pile à combustible selon la revendication 6, la soupape de commutation étant conçue pour commuter le chemin d'écoulement de l'air de sillage vers la première conduite d'alimentation lorsque la température de l'air de sillage est supérieure à une température du fluide de refroidissement d'un fluide de refroidissement passant à travers le refroidisseur, et
la soupape de commutation étant conçue pour commuter le chemin d'écoulement de l'air de sillage vers la seconde conduite d'alimentation lorsque la température de l'air de sillage est inférieure à la température du fluide de refroidissement.

8. Système de pile à combustible selon l'une quelconque des revendications 3 à 7, comprenant en outre :
une première soupape d'ajustement de débit conçue pour relier la première conduite d'alimentation et la conduite d'alimentation en air et en outre conçue pour ajuster sélectivement un débit de l'un parmi l'air d'entrée ou l'air de sillage devant être fourni à l'empilement de piles à combustible ; et
une seconde soupape d'ajustement de débit conçue pour relier la seconde conduite d'alimentation et la conduite d'alimentation en air et en outre conçue pour ajuster sélectivement un débit de l'air d'entrée ou de l'air de sillage devant être fourni à l'empilement de piles à combustible.

9. Système de pile à combustible selon l'une quelconque des revendications 1 à 8, comprenant :
un élément de filtre situé dans la conduite d'alimentation en air de sillage et conçu pour filtrer l'air de sillage.

10. Système de pile à combustible selon l'une quelconque des revendications 1 à 9, le rotor étant fourni pour générer une ou plusieurs d'une force de sustentation et d'une force de propulsion d'un objet associé au rotor.

11. Véhicule à propulsion rotative, comprenant :
un système de pile à combustible (10), le système de pile à combustible comprenant :
une conduite d'alimentation en air de sillage (210) conçue pour recevoir de l'air de sillage provenant d'un rotor (22) du véhicule à propulsion rotative ;
une soupape de commutation (310) conçue pour commuter une sortie de la conduite d'alimentation en air de sillage entre une première conduite d'alimentation (214) et une seconde conduite d'alimentation (216) ;
un refroidisseur (140) conçu pour refroidir l'air entrant en utilisant l'air de sillage provenant de la première conduite d'alimentation ; et
un empilement de piles à combustible (100) conçu pour recevoir l'air d'entrée provenant de l'un parmi le refroidisseur ou la seconde conduite d'alimentation.

12. Véhicule à propulsion rotative selon la revendication 11, la soupape de commutation étant conçue pour délivrer en sortie l'air de sillage à la première conduite d'alimentation lorsqu'une température d'air de sillage est supérieure à une température de fluide de refroidissement d'un fluide de refroidissement du refroidisseur.

13. Véhicule à propulsion rotative selon la revendication 11 ou 12, la soupape de commutation étant conçue pour délivrer en sortie l'air de sillage à la seconde conduite d'alimentation lorsqu'une température d'air de sillage est inférieure à une température de fluide de refroidissement.

14. Véhicule à propulsion rotative selon l'une quelconque des revendications 11 à 13, comprenant en outre :
une première soupape d'ajustement de débit reliant la première conduite d'alimentation et la conduite d'alimentation en air et conçue pour ajuster sélectivement un premier débit de l'un parmi l'air d'entrée ou l'air de sillage devant être fourni à l'empilement de piles à combustible ; et
une seconde soupape d'ajustement de débit reliant la seconde conduite d'alimentation et la conduite d'alimentation en air et en outre conçue pour ajuster sélectivement un second débit de l'un parmi l'air d'entrée ou l'air de sillage devant être fourni à l'empilement de piles à combustible.

15. Véhicule à propulsion rotative selon l'une quelconque des revendications 11 à 14, le refroidisseur fournissant l'air d'entrée à la seconde conduite d'alimentation lorsqu'il reçoit l'air d'entrée provenant de la première conduite d'alimentation.
